# EUROPEAN PATENT APPLICATION

(11) **EP 3 671 076 A1**
(43) Date of publication of application: **24.06.2020**
(21) Application number: 18215783.4
(22) Date of filing: 21.12.2018
(51) Int. Cl.: F25D 3/06, F25D 17/06

(54) **TEMPERATURE REGULATED STORAGE OF GOODS**

(71) Applicant: Vakava Technologies Ltd Oy, 02150 Espoo (FI)
(72) Inventor: APPEL, Stefan, 06150 Porvoo (FI); OJANPERÄ, Miika, 06150 Porvoo (FI); RIIHELÄINEN, Kimmo, 06150 Vantaa (FI)
(74) Representative: Berggren Oy, Helsinki & Oulu

(57) **Abstract**

There is provided a container (100, 101) for temperature regulated storage of goods, comprising: a first portion (102) for receiving a fuel pack (103) for regulating temperature of fluid within the container (100, 101); a second portion (104) connected to the first portion (102) for communications of the temperature regulated fluid received from the first portion, wherein the second portion (104) is adapted for communications of the temperature regulated fluid around a storage container (106) placed within the second portion (104) in a closed circulation, wherein the storage container is adapted to provide access to contents of the storage container at the same time the temperature regulated fluid is communicated around the storage container.

## Description

### FIELD

The present invention is related to temperature regulated storage of goods.

### BACKGROUND

US 5,598,713 discloses self-contained cooler/freezer apparatus for carrying items in a frozen or refrigerated environment. The nitrogen enriched container is configured to be insertable within the access door of an insulated container. The base of the insulated container comprises ridges upon which the pressurized nitrogen enriched container is placed. These ridges allow for circulation of the coolant gas, which is carbon dioxide, thereby providing for better heat energy transfer. The inner shell of each of the side walls and the rear wall, is corrugated so that the nitrogen gas container is not placed directly against the side walls and or rear wall, thereby allowing for the free circulation of carbon dioxide gas between the walls and the nitrogen gas container.

When the door of the insulated container is opened the coolant is allowed to release out of the insulated container and coolant is lost.

### BRIEF DESCRIPTION OF EMBODIMENTS

The present invention is defined by the subject-matter of the independent claims.

A first aspect of the present invention concerns container for temperature regulated storage of goods, comprising: a first portion for receiving a fuel pack for regulating temperature of fluid within the container; a second portion connected to the first portion for communications of the temperature regulated fluid received from the first portion, wherein the second portion is adapted for communications of the temperature regulated fluid around a storage container placed within the second portion in a closed circulation, wherein the storage container is adapted to provide access to contents of the storage container at the same time the temperature regulated fluid is communicated around the storage container.

A second aspect of the present invention concerns a vehicle, comprising a container according to an aspect.

A third aspect of the present invention concerns a computer program comprising instructions that when executed by at least one processor operatively connected to at least one temperature sensor for measuring a temperature inside a storage container for temperature regulated storage of goods, comprising:
a first portion for receiving a fuel pack for regulating temperature of fluid within the container;
a second portion connected to the first portion for communications of the temperature regulated fluid received from the first portion, wherein the second portion is adapted for communications of the temperature regulated fluid around the storage container placed within the second portion in a closed circulation, wherein the storage container is adapted to provide access to contents of the storage container at the same time the temperature regulated fluid is communicated around the storage container;
execution of the instructions causes controlling fluid flow between the first portion of the container and the second portion of the container based on readings of the temperature sensor.

Further aspects of the present invention comprise one or more of:
- the storage container comprises a doorway and a frame around the doorway, and the frame is adapted for forming a sealed connection with the doorway of the second portion, when the storage container is placed within the second portion;
- the storage container comprises a doorway and a frame around the doorway, and the frame is adapted for forming a sealed connection with the doorway of the second portion, when the storage container is placed within the second portion;
- the storage container and the second portion are at least partially nested, when the storage container is placed within the second portion such that their doorways are in the same direction;
- a guide arrangement on at least two sides of the storage container for guiding the fluid around the storage container within the second portion;
- the container comprises at least one input opening for the fluid from the first portion to the second portion and at least one output opening for the fluid from the second portion to the first portion;
- the at least one input opening and at least one output opening are arranged to communicate fluid on opposite sides of the storage container, and the guide arrangement is configured to prevent flow of the fluid directly from the input opening to the output opening without communications of the fluid around the storage container;
- the guide arrangement comprises one or more guides extending from at least one of the output opening and the input opening towards a side of the storage container connecting opposite sides of the storage container;
- the storage container comprises an outer surface for transferring heat between the fluid and the storage container and the outer surface comprises at least one area where a heat transfer capability of the outer surface is reduced with respect to one or more other areas of the outer surface for controlling heat transfer between the fluid and the storage container via the areas, when the fluid is communicated around the storage container;
- the area of reduced heat transfer capability is arranged at a first part of the outer surface that is upstream in a direction of flow of the fluid from a second part of the outer surface , where at least one area having a higher heat transfer capability is arranged;
- the container comprises one or more fluid movement apparatuses for causing the fluid flow;
- the container comprises at least one temperature sensor and the fluid movement apparatuses are controlled based on readings of the temperature sensor for controlling the fluid flow around the storage container;
- speed of one or more fluid movement apparatuses of the container are adjusted for controlling the fluid flow around the storage container.

### BRIEF DESCRIPTION OF DRAWINGS

Fig. 1, Fig. 2, fig. 3 and fig. 4 illustrate a container for housing a fuel pack and a storage container in different portions that are separated horizontally;
Fig. 5, Fig. 6, fig. 7 and fig. 8 illustrate a container for housing a fuel pack and a storage container in different portions that are separated vertically; and
Fig. 9 illustrates a storage container with an outer surface having areas with different heat transfer capability.

### EMBODIMENTS

In connection with temperature regulated storage of goods there is provided a container comprising one portion or compartment for receiving a fuel pack and another portion or compartment for receiving a storage container. The portions are connected for communications of temperature regulated fluid. The portion or compartment for the storage container is adapted for communications of temperature regulated fluid around the storage container placed within the respective compartment. The storage container is adapted to provide access to contents of the storage container at the same time the temperature regulated fluid is communicated around the storage container in a closed circulation. In this way the fluid may be prevented from leaving the container, when the contents of the storage container are accessed.

Temperature regulated storage of goods may be used in logistics chains in various industries, where food, medicines or organs or any items that benefit from temperature regulated storage are stored in a fixed location and/or transported between locations.

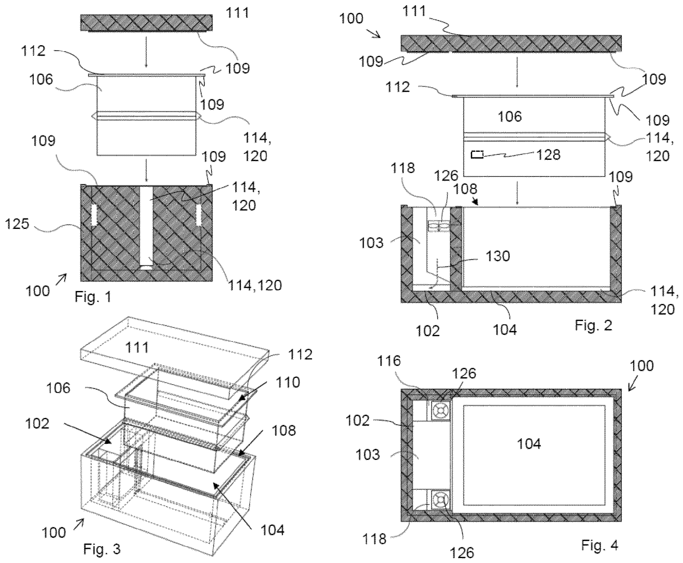

In the following, embodiments of the present invention are described wit reference to the drawings in which Fig. 1, Fig. 2, fig. 3 and fig. 4 illustrate a container 100 for housing a fuel pack 103 and a storage container 106 in different portions 102, 104 that are separated horizontally. Fig. 1 is a view from one side of the container 100, where the storage container 106 is out of the container 100. Fig. 2 is a view from another side of the container 100, where the storage container 106 is out of the container 100. Fig. 4 is a view of the container 100 from above. Fig.3 is an exploded perspective view of the container 100.

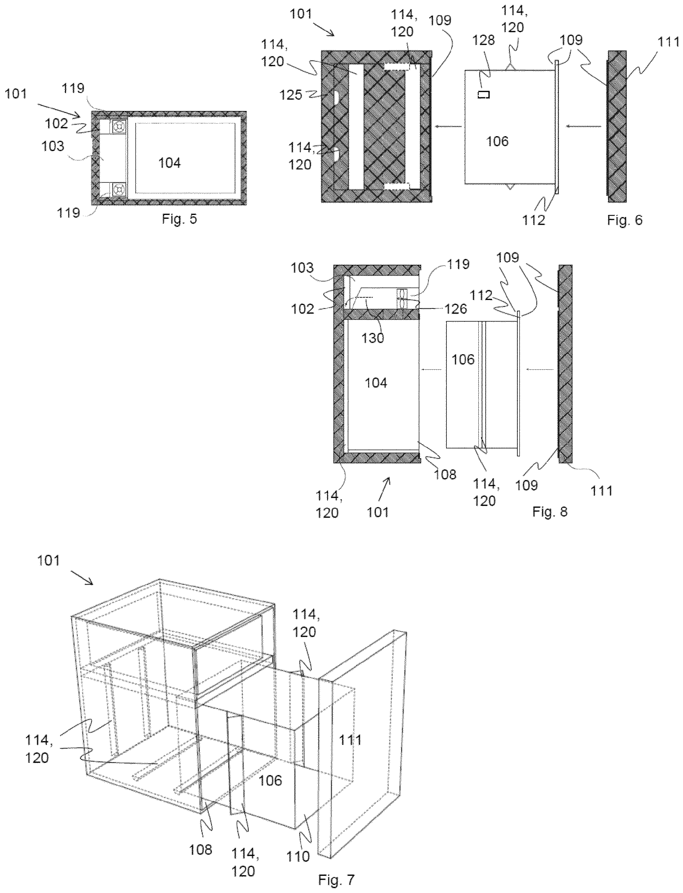

Fig. 5, Fig. 6, fig. 7 and fig. 8 illustrate a container for housing a fuel pack 103 and a storage container 101 in different portions that are separated vertically. Fig. 5 is a view of the container 101 from above. Fig. 6 is a view from one side of the container 101, where the storage container 106 is out of the container 101. Fig. 8 is a view from another side of the container 100, where the storage container 106 is out of the container 101. Fig.7 is an exploded perspective view of the container 100.

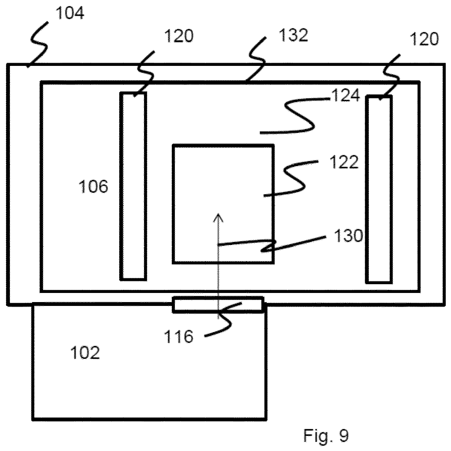

Fig. 9 illustrates a storage container with an outer surface having areas with different heat transfer capabilities. The storage container is illustrated in a situation, where the storage container is within a second portion 104 of the container 100,101 for facilitating understanding of operation of the container in terms of fluid flow around the storage container. In Fig. 6 input of fluid from a first portion of the container to the second portion is illustrated by a direction of fluid flow 130. The storage container is illustrated from one side and it should be appreciated that some parts such as an output opening from the second portion to the first portion are on the other side of the storage container and therefore not shown.

In the following the embodiments are described with references to the drawings, where same or similar items are referenced by the same reference signs. Cross-sections are illustrated by hatching.

A container 100, 101 for temperature regulated storage of goods comprises a first portion 102 for receiving a fuel pack 103 for regulating temperature of fluid within the container 100, 101 and a second portion 104 connected to the first portion 102 for communications of the temperature regulated fluid received from the first portion. The second portion 104 is adapted for communications of the temperature regulated fluid around a storage container 106 placed within the second portion 104 in a closed circulation, wherein the storage container is adapted to provide access to contents of the storage container at the same time the temperature regulated fluid is communicated around the storage container. Communications of the fluid around the storage container facilitates even temperature distribution inside the storage container. Since the contents of the storage container may be accessed at the same time the temperature regulated fluid is communicated around the storage container in a closed circulation, the fluid is prevented from escaping out of the container, when the contents are accessed. The closed circulation of the fluid provides that the fluid may be circulated inside the first and second container without letting the fluid out of the container. The closed circulation may be supported by one or more seals 109 or gaskets that may be provided in a doorway 108 of the second portion, in a doorway 110 of the storage container, on one or more surfaces of a frame 112 of the storage container and/or a door 111 of the container. The frame may be arranged around the doorway 110 of the storage container such that the frame may comprise a first surface for communicating or acting against a door 111 and a second surface for communicating or acting against the container, for example the doorway 108 of the second portion. The contents of the storage container may be accessed at least when goods may be loaded into the storage container and/or goods may be removed from the storage container.

In an example operation of the container 100, 101, the fuel pack 103 provides temperature regulation, e.g. heating or cooling, of the fluid within the first portion. The fluid may be gas or liquid that is enclosed within the container. Examples, of the fluid comprise fluid capable of efficient absorption of heat such as fluid having a low temperature coefficient. The temperature regulated fluid within the first portion may flow from the first portion to the second portion, where heat may be transferred between the fluid and the storage container. In this way the storage container and goods within the storage container may be cooled or heated by the fluid. The fluid utilized in temperature regulation of the storage container within the second portion may return from the second portion to the first portion, where the fluid may be cooled or heated again by the fuel pack.

In an example, the fuel pack 103 for the container 100, 101 may comprise a temperature regulating material. Examples of the temperature regulating material comprise a coolant or a heating material. The coolant or a heating material may be a phase change material. A phase change material may be a substance with a high heat of fusion which is capable of storing and releasing large amounts of energy by melting and solidifying at a certain temperature. Accordingly, heat may be absorbed or released by the phase change material, when the phase change material changes between different phases such as solid, liquid and gas. Examples of phase changes comprise a phase change between solid and liquid, and a phase change between solid and gas. Example of the phase change material providing a phase change between solid and gas comprise dry ice that changes from solid to gas, when the dry ice is sublimed. The fuel pack may be configured for transferring energy between the phase change material and the fluid for cooling or heating the fluid. In an example the fuel pack may comprise a housing or enclosure that provides efficient heat transfer. The efficient heat transfer may be provided by material, for example aluminum, of the housing. Alternatively or additionally, the fuel pack may comprise one or more ducts, holes or openings via which fluid within the first portion may enter and leave the housing or enclosure of the fuel pack such that the fluid may make contact with the phase change material or packaging of the phase change material.

It should be appreciated that the container 100, 101 may include insulation 125 to prevent unnecessary heat transfer or at least unnecessary heat loss as needed. In this way the contents of the container may be prevented from cooling or heating as necessary. For example, an outer shell of the container may be insulated to prevent heat transfer between environment of the container and the fluid within the container.

In an embodiment the second portion 104 comprises a doorway 108 for forming a sealed connection with the storage container 106 placed within the second portion 104. In this way the flow of fluid out of the second portion via the doorway can be at least partly prevented such that the closed circulation may be maintained, when access to contents of the storage container is provided.

In an example, the doorway may comprise one or more seals 109 or gaskets for preventing flow of the fluid out of the doorway. The seal may be provided at edges of the doorway. Alternatively or additionally, the door 111 may comprise one or more seals 109. Then, when the door is arranged to cover at least the doorway 108, the sealed connection may be established between the doorway and the storage container.

In an example the doorway 108 comprises a door 111 that is arranged, e.g. by, fitting, hinging or sliding attachment, movable between a closed position and an open position. In the closed position, the door seals at least the second portion such that the storage container and goods within the storage container cannot be accessed and goods cannot be removed from the storage container. In this position, the fluid communicated around the storage container efficiently regulates the temperature inside the storage container. In the open position, the door may be at least partly attached, e.g. by hinging, or detached, e.g. by lifting, the door from the container 100, 101. Accordingly, in the open position, the doorway of the second portion may be at least partly uncovered such that contents of the storage container may be accessed.

In an example, the first portion comprises a doorway and a door may be configured to seal the first portion such that fluid within the first portion may be kept inside the first portion, when the door is in the closed position. In this way the fluid may be prevented from leaking out of the container via the first portion. In an example the size of the door may be adapted to cover both the doorways of the first portion and the second portion, or the doorway of the first portion and the second portion may have their own separate doors. When the door of the first portion is in an open position, the door may be configured to uncover the doorway of the first portion. Accordingly, in the open position, fuel and/or fuel pack 103 may be loaded to the first portion.

In an embodiment the storage container 106 comprises a doorway 110 and a frame 112 around the doorway, and the frame 112 is adapted for forming a sealed connection with the doorway 108 of the second portion 104, when the storage container 106 is placed within the second portion 104. In this way communications of the fluid out of the second portion may be at least partly prevented. Accordingly, since the frame of the storage container 106 seals the doorway of the second portion, goods may be loaded into the storage container and goods may be removed from the storage container without the fluid leaking out of the second portion and the goods within the storage container placed within the container may be accessed.

In an example, the frame may be arranged around the doorway 110 of the storage container such that the frame may comprise a first surface, e.g. an upper surface, for communicating or acting against a door 111 and a second surface, e.g. a lower surface, for communicating or acting against the container, for example the doorway 108 of the second portion. A seal or gasket may be provided in one or more of the surfaces of the frame for forming a sealed connection with the doorway 110.

In an embodiment the storage container 106 and the second portion 104 are at least partially nested, when the storage container 106 is placed within the second portion 104 such that their doorways 108,110 are in the same direction. In this way the fluid may be communicated around the storage container when goods are placed within the storage container or removed from the storage container without removing the storage container out of the second portion. In this way goods may be loaded into the storage container and removed from the storage individually.

In an example, depth of the storage container may be adapted to the depth of the second portion such that the storage container may be fitted inside the second portion. In this way the storage container 106 may be nested with the second portion such that outer dimensions of the container may be maintained the same, when the storage container is inside the second portion and removed from the second portion. The outer dimensions may be the outer dimensions of the container, when the fluid is communicated around the storage container in a closed circulation between the first portion and the second portion. In an example the outer dimensions may be defined based on inside depth, wall thickness of the container and a thickness of the door provided on the doorway of the second container.

In an embodiment the apparatus comprises a guide arrangement 114 on at least two sides of the storage container 106 for guiding the fluid around the storage container 106 within the second portion 104. In this way flow of the fluid around the storage container may be controlled such that even cooling inside the storage container may be provided.

In an embodiment the container 100, 101 comprises one or more input openings 116 for the fluid from the first portion 102 to the second portion 104 and one or more output openings 118 for the fluid from the second portion 104 to the first portion 102. In this way closed circulation of the fluid may be supported. It should be appreciated that an input opening may serve for an output opening and vice versa, depending on which direction the fluid is caused to flow and the opening is viewed from. On the other hand, an opening may be adapted to serve particularly for input or output flow of the fluid. In an example, dimensions and/or form of the opening may be adapted for the opening serving particularly as an input opening or an output opening. Alternatively or additionally, an input opening 116 and/or an output opening 118 may be provided by a duct or channel 119 extending between the first portion and the second portion. Accordingly, the dimensions and/or form of the duct or channel may be adapted for the opening serving particularly as an input opening or an output opening.

It should be appreciated that the container 100, 101 may comprise a plurality of input openings 116 and output openings 118 such that even flow of fluid around the storage container 106 may be supported. In an example input openings may be provided on one side of the storage container placed within the second portion 104 and the output openings may be provided on another side of the storage container placed within the second portion. In example the input openings 116 and output openings may be arranged to locations within the second portion such that they enable communications of fluid on opposite sides of the storage container. In an example, the openings may be separated by distance of one wall of the storage container. A guide 120 may be arranged between the input openings 116 and output openings 118 such that flow of the fluid directly from the input opening to the output opening may be prevented.

In an embodiment the at least one input opening 116 and at least one output opening 118 are arranged to communicate fluid on opposite sides of the storage container 106, and the guide arrangement is configured to prevent flow of the fluid directly from the input opening to the output opening without communications of the fluid around the storage container 106. In this way even temperature control of the storage container may be provided.

In an embodiment the guide arrangement 114 comprises one or more guides 120 extending from at least one of the output opening 118 and the input opening 116 towards a side 132 of the storage container 106 connecting opposite sides of the storage container 106. In this way size of outer surface area of the storage container which is utilized for heat transfer may be controlled.

It should be appreciated that a guide 120 may be a structure that is capable of guiding or preventing flow of fluid, when the storage container is within the second portion 104 of the container 100, 101. The guide may be made of a suitable material for example, aluminum or plastics. Dimensions of the guide may be adapted to the dimensions of the storage container 106 and second portion such that operation of the guide may be provided for controlling fluid flow around the storage container 106. Guides may be installed formed to a wall inside the second portion and an outer wall of the storage container. A guide may be formed by a combination of structures installed or formed to a wall inside the second portion and an outer wall of the storage container. When the storage container guides may be positioned within the second portion on one, two, three, four, five or more sides of the storage container.

In an example, a guide 120 may be arranged to extend in a horizontal direction or a vertical direction. A guide arranged in a horizontal direction may facilitate flow of fluid in a horizontal direction. This may be particularly beneficial in the container 100, where the first portion and the second portion are located side-by-side, whereby the fluid that flows around the storage container 106 is flowing sideways, i.e. horizontally, when the container is on a level surface. A guide arranged in a vertical direction may facilitate flow of fluid in a horizontal direction. This may be particularly beneficial in the container 101, where the first portion and the second portion are located one upon each other, whereby the fluid that flows around the storage container 106 is flowing upwards and downwards around a top side of the storage container, when the container is on a level surface.

It should be appreciated that configuration of the container 101 may be adapted for efficient communications of the fluid. More particularly, the locations of the first portion and the second portion 104 may be arranged with respect to each other such that efficient fluid flow from the first portion containing the fuel may be facilitated around the storage container 106. The arrangement of the first portion and the second portion may be adapted based on desired temperatures within the storage container. In an example, for low temperatures within the storage container, such as within a temperature range for example -24°C - -0°C, particularly within -24°C - -18°, the first portion 102 may be arranged on top of the second portion. In an example, for low mid-range temperatures within the storage container, such as within a temperature range within 0°C - 8 °C, the second portion may be arranged on top of the first portion. The range -24°C - -0°C may be applied at least for food in general, whereas - 24°C - -18° may be applied for frozen goods.

In an example, or low temperatures within the storage container, such as within a temperature range for example 9°C - 90°C, particularly within 9°C - 39 or particularly within 15°C - -25 °C, i.e. an ambient temperature, or particularly within 40°C - 90 °C, the first portion 102 may be arranged on top of the second portion 104.

In an example, the storage container may be formed by walls that are at right angles with respect to each other, whereby the guides 120 may direct a fluid flow along an outer surface formed by one wall of the storage container towards a side of the storage container that is remote from an input opening via which the fluid is received from the first portion. In this way the fluid may be efficiently controlled towards the remote side.

In an embodiment the storage container 106 comprises an outer surface having areas with different heat transfer capabilities. Accordingly, the outer surface may provide transferring heat between the fluid and the storage container 106 and the outer surface may comprise at least one area 122 where a heat transfer capability is reduced with respect to one or more other areas 124 of the outer surface for controlling heat transfer between the fluid and the storage container 106 via the areas 122,124, when the fluid is communicated around the storage container 106. In this way even temperature regulation inside the storage container may be supported.

In an example, heat transfer capability may be reduced by adding insulation 125 on the outer surface or underneath the outer surface. The insulation may be provided by insulation material, increased material thickness of the storage container wall and constructing areas of the outer surface of different materials.

In an embodiment the area 122 of reduced heat transfer capability is arranged at a first part of the outer surface that is upstream in a direction of flow of the fluid from a second part of the outer surface, where at least one area 124 having a higher heat transfer capability is arranged. In this way, the temperature regulation of the storage container by the fluid via the first part may be controlled such that the temperature regulation provided by the first part and the second part may evened out.

In an embodiment the container 100, 101 comprises one or more fluid movement apparatuses 126 for causing the fluid flow. In an example the fluid movement apparatus may be installed in an opening, or a duct or channel 119 extending between the first portion 116 and the second portion 118. Examples of the fluid movement apparatuses comprise a fan, pump or compressor.

In an example one of the fluid movement apparatuses may be configured to push fluid from the first portion to the second portion and one of the fluid movement apparatuses may be configured to draw fluid from the second portion to the first portion. It is viable that only one fluid movement apparatus is provided for moving the fluid between the first portion and the second portion. It should be appreciated more than one fluid movement apparatus, e.g. one, two, three, four or any number of fluid movement apparatuses, may be configured to move the fluid in any direction between the first portion and the second portion.

In an embodiment the container 100, 101 comprises at least one temperature sensor 128 and the fluid movement apparatuses 126 are controlled based on readings of the temperature sensor 128. In this way the fluid flow around the storage container may be regulated such that a desired temperature may be achieved.

In an example the temperature sensor 128 may be installed to a storage container 106 such that a temperature inside the storage container may be measured.

An embodiment concerns a container 100, 101 comprising at least one processor operatively connected to at least one temperature sensor 128 for measuring a temperature inside a storage container 106, and memory including computer program code, the at least one memory and computer program instructions or computer program code configured to, with the at least one processor and temperature sensor, to cause controlling fluid flow between a first portion 102 of the container and a second portion 104 of the container. In an example the fluid flow may be controlled by adjusting speed of one or more fluid movement apparatuses 126 for controlling the fluid flow around the storage container 106. For this purpose the fluid movement apparatuses may be operatively connected to the processor. Controlling the fluid flow provides that the speed of the fluid flowing around the storage container may be adjusted.

An embodiment concerns a computer program comprising instructions or computer program code that when executed by at least one processor operatively connected to at least one temperature sensor 128 for measuring a temperature inside a storage 106 container for temperature regulated storage of goods, comprising: a first portion 102 for receiving a fuel pack 103 for regulating temperature of fluid within the container 100, 101; a second portion 104 connected to the first portion 102 for communications of the temperature regulated fluid received from the first portion, wherein the second portion 104 is adapted for communications of the temperature regulated fluid around the storage container 106 placed within the second portion 104 in a closed circulation, wherein the storage container is adapted to provide access to contents of the storage container at the same time the temperature regulated fluid is communicated around the storage container. Execution of the instructions or computer program code causes controlling fluid flow between the first portion 1 02 of the container and the second portion 104 of the container based on readings of the temperature sensor 128.

It should be appreciated that a connection for example a wireless or wired connection between a processor, a temperature sensor and/or a fluid movement apparatus may provide an operative connection for purposes according to an embodiment described herein. Examples of wired connections comprise electric conductors for data communications such as data buses. Examples of wireless connections comprise at least radio frequency communications over data connections for mobile communications networks or wireless local area networks.

An embodiment concerns a vehicle, comprising the container 100, 101 according to an embodiment. The vehicle may be a car, van, truck, airplane, motorcycle, boat or ship. The vehicle may comprise an installation position for the container, where the container may be loaded and unloaded. Examples of the installation position comprise a cargo space, a booth, or cabin. The vehicle may comprise a limited power supply. Examples of limited power supplies are electrochemical energy storage devices such as batteries that have an energy storage capacity that is sufficient for the purposes of at least moving the vehicle but insufficient to regulate temperature of transported goods. Further examples of limited power supplies may be power sources utilizing non-fossil fuels. Accordingly, the vehicles may be electric vehicles or non-fossil fuel vehicles. Examples of non-fossil fuels comprise biodiesel, bioalcohol (methanol, ethanol, butanol), refuse-derived fuel, chemically stored electricity (batteries and fuel cells), hydrogen, non-fossil methane, non-fossil natural gas, vegetable oil, propane and other biomass sources.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### LIST OF REFERENCE SIGNS

100, 101 container
102 first portion
104 second portion
106 storage container
108 doorway of second portion
109 seal
110 doorway of storage container
111 door
112 frame
114 guide arrangement
116 input opening
118 output opening
119 channel
120 guides
122 area of reduced heat transfer capability
124 area of higher heat transfer capability
125 insulation
126 fluid movement apparatus
128 temperature sensor
130 direction of fluid flow
132 side of the storage container

## Claims

1. A container (100, 101) for temperature regulated storage of goods, comprising:
a first portion (102) for receiving a fuel pack (103) for regulating temperature of fluid within the container (100, 101);
a second portion (104) connected to the first portion (102) for communications of the temperature regulated fluid received from the first portion, wherein the second portion (104) is adapted for communications of the temperature regulated fluid around a storage container (106) placed within the second portion (104) in a closed circulation, wherein the storage container is adapted to provide access to contents of the storage container at the same time the temperature regulated fluid is communicated around the storage container.

2. The container (100, 101) according to claim 1, wherein the second portion (104) comprises a doorway (108) for forming a sealed connection with the storage container (106) placed within the second portion (104).

3. The container (100, 101) according to claim 2, wherein the storage container (106) comprises a doorway (110) and a frame (112) around the doorway, and the frame (112) is adapted for forming a sealed connection with the doorway (108) of the second portion (104), when the storage container (106) is placed within the second portion (104).

4. The container (100, 101) according to any of claims 1 to 3, wherein the storage container (106) and the second portion (104) are at least partially nested, when the storage container (106) is placed within the second portion (104) such that their doorways (108,110) are in the same direction.

5. The container (100, 101) according to any of claims 1 to 4, wherein the apparatus comprises a guide arrangement (114) on at least two sides of the storage container (106) for guiding the fluid around the storage container (106) within the second portion (104).

6. The container (100, 101) according to any of claims 1 to 5, wherein the container (100, 101) comprises at least one input opening (116) for the fluid from the first portion (102) to the second portion (104) and at least one output opening (118) for the fluid from the second portion (104) to the first portion (102).

7. The container (100, 101) according to any of claims 1 to 6, wherein the at least one input opening (116) and at least one output opening (118) are arranged to communicate fluid on opposite sides of the storage container (106), and the guide arrangement is configured to prevent flow of the fluid directly from the input opening to the output opening without communications of the fluid around the storage container (106).

8. The container according to any of claims 1 to 7, wherein the guide arrangement (114) comprises one or more guides (120) extending from at least one of the output opening (118) and the input opening (116) towards a side (132) of the storage container (106) connecting opposite sides of the storage container (106) .

9. The container (100, 101) according to any of claims 1 to 8, wherein the storage container (106) comprises an outer surface for transferring heat between the fluid and the storage container (106) and the outer surface comprises at least one area (122) where a heat transfer capability of the outer surface is reduced with respect to one or more other areas (124) of the outer surface for controlling heat transfer between the fluid and the storage container (106) via the areas (122,124), when the fluid is communicated around the storage container (106).

10. The container (100, 101) according to claim 9, wherein the area (122) of reduced heat transfer capability is arranged at a first part of the outer surface that is upstream in a direction of flow of the fluid from a second part of the outer surface , where at least one area (124) having a higher heat transfer capability is arranged.

11. The container (100, 101) according to any of claims 1 to 10, wherein the container (100, 101) comprises one or more fluid movement apparatuses (126) for causing the fluid flow.

12. The container (100, 101) according to claim 11, wherein the container (100, 101) comprises at least one temperature sensor (128) and the fluid movement apparatuses (126) are controlled based on readings of the temperature sensor (128).

13. A vehicle, comprising the container (100, 101) according to any of claims 1 to 12.

14. A computer program comprising instructions that when executed by at least one processor operatively connected to at least one temperature sensor (128) for measuring a temperature inside a storage (106) container for temperature regulated storage of goods, comprising:
a first portion (102) for receiving a fuel pack (103) for regulating temperature of fluid within the container (100, 101);
a second portion (104) connected to the first portion (102) for communications of the temperature regulated fluid received from the first portion, wherein the second portion (104) is adapted for communications of the temperature regulated fluid around the storage container (106) placed within the second portion (104) in a closed circulation, wherein the storage container is adapted to provide access to contents of the storage container at the same time the temperature regulated fluid is communicated around the storage container;
execution of the instructions causes controlling fluid flow between the first portion (102) of the container and the second portion (104) of the container based on readings of the temperature sensor (128).

15. A computer program according to claim 14, wherein speed of one or more fluid movement apparatuses of the container are adjusted for controlling the fluid flow around the storage container (106).
